(19) Europäisches Patentamt / European Patent Office / Office européen des brevets

(11) **EP 2 936 500 B1**

(12) **FASCICULE DE BREVET EUROPEEN**

(45) Date de publication et mention de la délivrance du brevet:
**28.02.2018 Bulletin 2018/09**

(51) Int Cl.:
***G21D 1/00*** *(2006.01)*     ***G21D 3/04*** *(2006.01)*
***E21D 9/14*** *(2006.01)*

(21) Numéro de dépôt: **13820832.7**

(22) Date de dépôt: **19.12.2013**

(86) Numéro de dépôt international:
**PCT/FR2013/053199**

(87) Numéro de publication internationale:
**WO 2014/096725 (26.06.2014 Gazette 2014/26)**

(54) **INSTALLATION D'AMENÉE D'EAU POUR LE REFROIDISSEMENT D'UNE CENTRALE NUCLÉAIRE, ET CENTRALE NUCLÉAIRE COMPRENANT UNE TELLE INSTALLATION**

WASSEREINLASSANLAGE ZUR KÜHLUNG EINES KERNKRAFTWERKS UND KERNKRAFTWERK MIT SOLCH EINER ANLAGE

WATER INTAKE INSTALLATION FOR COOLING A NUCLEAR POWER PLANT, AND NUCLEAR POWER PLANT COMPRISING SUCH AN INSTALLATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2012 FR 1262410**

(43) Date de publication de la demande:
**28.10.2015 Bulletin 2015/44**

(73) Titulaire: **Electricité de France**
**75008 Paris (FR)**

(72) Inventeur: **LEGENDRE, Christophe**
**F-50690 Virandeville (FR)**

(74) Mandataire: **Cabinet Plasseraud**
**66, rue de la Chaussée d'Antin**
**75440 Paris Cedex 09 (FR)**

(56) Documents cités:
| | |
|---|---|
| CH-A- 517 352 | DE-A1- 2 559 305 |
| JP-A- S5 746 197 | JP-A- 2000 170 138 |
| US-A- 6 095 719 | |

EP 2 936 500 B1

## Description

La présente invention se rapporte à une installation d'amenée d'eau pour au moins un circuit de refroidissement à échangeur de chaleur d'une ou plusieurs tranches d'une centrale nucléaire, comprenant un bassin d'aspiration alimenté en eau et à partir duquel au moins une station de pompage de la centrale aspire de l'eau pour la faire circuler dans un dit circuit de refroidissement, et comprenant en outre un tunnel d'aspiration communicant avec le bassin d'aspiration pour l'alimenter en eau, relié à au moins deux entrées d'eau immergées dans une étendue d'eau telle qu'une mer, un lac ou un fleuve. Une installation de ce type est décrite dans JP 2000 170138. On peut se référer aussi à d'autres documents, notamment DE2559305, JP S57 46197, CH 517 352 et US 6 095 719. Le circuit de refroidissement à échangeur de chaleur est typiquement destiné à refroidir la vapeur d'eau en sortie d'une turbine d'alternateur dans un circuit secondaire d'un réacteur de la centrale nucléaire, de façon à condenser cette vapeur pour que l'eau revenue à l'état liquide soit réinjectée dans des générateurs de vapeur du circuit secondaire. Les générateurs de vapeur permettent le refroidissement d'un circuit primaire à fluide pressurisé pour refroidir le réacteur, en réalisant un échange thermique entre le circuit primaire et le circuit secondaire. Sur le plan fluidique, les circuits primaire et secondaire sont fermés, tandis que le circuit de refroidissement à échangeur de chaleur est ouvert et est complètement isolé du circuit secondaire qui est lui-même complètement isolé du circuit primaire. L'eau en sortie d'un échangeur de chaleur ne présente donc pas de radioactivité, et peut être évacuée par exemple pour retourner dans l'étendue d'eau qui alimente le circuit.

Une installation d'amenée d'eau telle que définie ci-dessus est connue notamment de la centrale nucléaire de Seabrook, construite à proximité d'un bord de mer dans le sud du New Hampshire (USA) et mise en service en 1990. L'installation comprend un unique tunnel d'aspiration généralement rectiligne de plusieurs kilomètres de long, ayant une partie d'extrémité située sous le fond de la mer et raccordée à trois puits d'aspiration verticaux régulièrement espacés entre eux de moins d'une trentaine de mètres. Chaque puits d'aspiration débouche juste au dessus du fond marin et comprend une partie supérieure formant une des dites entrées d'eau immergées et située à environ une quinzaine de mètre sous le niveau de la mer. Chaque entrée d'eau est munie de grilles calibrées pour éviter que des gros animaux marins tels que des phoques pénètrent dans le tunnel d'aspiration et s'y perdent.

Cette installation connue ne répond pas complètement au critère de défaillance unique impliquant qu'un système de sûreté soit capable de remplir ses fonctions même si une défaillance unique affecte l'un de ses équipements, lequel critère impose généralement une redondance des fonctions essentielles de sûreté. En effet, l'installation répond à ce critère en cas de défaillance d'un voire de deux des trois puits d'aspiration, par exemple en cas de dommages causés à une entrée d'eau d'un puits par un bateau qui viendrait sombrer juste sur l'entrée d'eau, mais il n'est pas prévu de redondance du tunnel d'aspiration afin de poursuivre l'alimentation normale en eau du bassin d'aspiration en cas de dommages importants dans le tunnel. Des dommages importants pourraient survenir par exemple dans l'hypothèse bien que peu probable d'un effondrement dans une zone du tunnel.

On connait également de la demande de brevet japonais publiée le 17.06.1985 sous le n° JP60111089A une installation d'amenée d'eau comprenant un bassin d'aspiration alimenté en eau par un tunnel d'aspiration souterrain, le tunnel étant relié à une entrée d'eau immergée dans la mer à une relativement faible profondeur, l'entrée d'eau pouvant se trouver à découvert avant une vague de tsunami. Ce document ne prévoit pas de dédoubler l'entrée d'eau et/ou le tunnel d'aspiration. On notera que dans le cas d'une centrale en bord de mer dans une région sujette à un risque important de tsunami ou de raz de marée, il est souvent prévu un bassin d'aspiration alimenté en eau par un tunnel d'aspiration souterrain passant sous une digue de protection de la centrale.

Afin de répondre au critère de défaillance unique dans le cas par exemple d'une obstruction au moins partielle d'un tunnel suite à un effondrement dans le tunnel, il est possible de prévoir à la conception deux tunnels d'aspiration identiques disposés en parallèle. Néanmoins, cette solution implique des coûts de construction importants.

La présente invention vise à proposer une installation d'amenée d'eau répondant au critère de défaillance unique pour un coût de construction notablement inférieur au coût de la solution susmentionnée.

A cet effet, l'invention a pour objet une installation d'amenée d'eau telle que définie dans la revendication 1. Grâce à ces dispositions, il est possible de satisfaire le critère de défaillance unique sans nécessiter deux tunnels d'aspiration indépendants. Un avantage notable d'une telle construction consiste en ce que le creusement du tunnel d'aspiration peut être réalisé par un tunnelier suivant un seul parcours, dès lors que la technique de construction employée permet de réaliser le tunnel avec une certaine courbure. En choisissant l'emplacement du tunnel dans une zone géologique où le sous-sol n'est pas trop dur à creuser, le creusement du tunnel suivant un seul parcours permettra généralement au tunnelier d'utiliser une seule tête de forage.

En comparaison, le creusement de deux tunnels d'aspiration indépendants aboutissant chacun sous la mer pose des problèmes pour récupérer le tunnelier ayant creusé chaque tunnel, et dans tous les cas la tête de forage doit être abandonnée au bout du tunnel sous le fond de l'étendue d'eau, ce qui nécessite d'utiliser au moins deux têtes de forage pour creuser les deux tunnels d'aspiration. La demanderesse a effectué des études comparatives de coûts de construction de tunnels pour une même disposition de deux entrées d'eau éloignées l'une de l'autre, et estime que la solution objet de l'invention permet généralement un coût de construction notablement inférieur, en dépit d'une longueur totale supérieure du tunnel en boucle en comparaison avec la longueur cumulée de deux tunnels d'aspiration parallèles et indépendants. De plus, les opérations d'inspection et de maintenance d'un tunnel en boucle par des robots ou des plongeurs sont estimés plus rapides et moins couteuses par rapport à celles prévues dans le cas de deux tunnels d'aspiration indépendants. En effet, à titre d'exemple, un même robot peut inspecter le tunnel en boucle en une seule opération, le robot pouvant être introduit par une extrémité du tunnel pour parcourir l'intégralité du tunnel et ressortir par l'autre extrémité.

En outre, comme détaillé plus loin, il suffit de deux entrées d'eau raccordées au tunnel d'aspiration en boucle pour que dans le cas d'une obstruction locale par exemple causée par un effondrement dans le tunnel, le bassin d'aspiration reste généralement alimenté en eau par les deux entrées d'eau. Cette configuration est avantageuse en terme de sécurité par rapport à une disposition avec deux tunnels d'aspiration indépendants munis chacun d'une entrée d'eau et dans laquelle une obstruction locale d'un des deux tunnels implique nécessairement la perte de l'alimentation du bassin par l'entrée d'eau correspondante.

Selon un mode de réalisation avantageux d'une installation d'amenée d'eau selon l'invention, le tunnel d'aspiration présente au moins un tronçon en courbe ayant un rayon de courbure compris entre 50 mètres et 300 mètres. Une telle disposition permettra généralement le creusement du tunnel d'aspiration en boucle suivant un seul parcours par un même tunnelier, et sur une longueur totale telle que le coût de construction du tunnel reste inférieur au coût qui serait requis pour creuser deux tunnels d'aspiration indépendants.

Dans d'autres modes de réalisation préférés d'une installation d'amenée d'eau selon l'invention, on a recours notamment à l'une ou l'autre des dispositions suivantes :

- ledit tronçon en courbe forme un arc de cercle s'étendant sur au moins un demi-cercle ;

- au moins une dite entrée d'eau est immergée à une profondeur de l'étendue d'eau telle que la température de l'eau à ladite profondeur reste toute l'année inférieure à 21°C et de préférence inférieure à 16°C ;

- l'installation comprend un deuxième tunnel d'aspiration relié à au moins deux entrées d'eau immergées dans ladite étendue d'eau, ledit deuxième tunnel d'aspiration formant une boucle présentant deux extrémités qui communiquent avec le bassin d'aspiration.

- le tunnel d'aspiration se prolonge à au moins l'une de ses deux extrémités par un tunnel d'entretien comprenant une partie en pente qui débouche au sol, ledit tunnel d'entretien ayant été creusé par un tunnelier qui a servi à creuser le tunnel d'aspiration.

- lesdites au moins deux entrées d'eau immergées sont situées chacune au niveau d'une extrémité supérieure d'un puits d'aspiration essentiellement vertical raccordé au tunnel d'aspiration et sont distantes d'au moins 100 mètres l'une de l'autre.

- le bassin d'aspiration est situé dans une partie de fond d'un chenal, ledit chenal comprenant une partie d'entrée qui communique avec ladite étendue d'eau, et l'installation comprend au moins une paroi qui réalise une séparation entre ladite partie de fond et ladite partie d'entrée du chenal de façon à ce que l'eau du bassin d'aspiration ne se mélange pas avec l'eau de ladite partie d'entrée du chenal.

- le bassin d'aspiration est couvert par un dispositif de couvercle essentiellement étanche à l'eau, et des ouvertures calibrées entre le bassin d'aspiration et l'environnement extérieur au bassin sont réalisées dans ledit dispositif de couvercle ou à proximité, de façon à laisser passer un flux d'eau limité depuis le bassin d'aspiration vers ledit environnement extérieur en cas de remplissage complet du bassin dû à une montée des eaux inhabituelle de ladite étendue d'eau.

- les deux extrémités de la boucle formée par le tunnel d'aspiration se situent au niveau d'une même cavité souterraine qui communique avec le bassin d'aspiration par l'intermédiaire d'un unique conduit généralement vertical.

L'invention a également pour objet une centrale nucléaire comprenant au moins une tranche nucléaire et une installation d'amenée d'eau selon l'invention, dans laquelle le tunnel d'aspiration et chacune desdites entrées d'eau sont dimensionnés de façon à ce que l'alimentation du bassin d'aspiration par une seule et quelconque des deux extrémités du tunnel d'aspiration et à partir d'une seule et quelconque desdites entrées d'eau soit suffisante pour alimenter en eau la totalité des stations de pompage de ladite installation en fonctionnement normal de l'unique tranche ou de la totalité des tranches nucléaires de la centrale. Dans le cas d'une centrale comprenant au moins deux tranches nucléaires, ledit bassin d'aspiration peut avantageusement être adapté pour fournir de l'eau à plusieurs stations de pompage affectées chacune à une tranche nucléaire.

L'invention a aussi pour objet une centrale nucléaire comprenant au moins deux tranches et une installation d'amenée d'eau selon l'invention, dans laquelle l'installation d'amenée d'eau comprend au moins un deuxième tunnel d'aspiration formant une boucle et présentant deux extrémités qui communiquent avec le bassin d'aspiration.

L'invention a également pour objet un procédé pour réaliser une installation d'amenée d'eau selon l'invention, mettant en oeuvre une étape de creusement du tunnel d'aspiration par un tunnelier suivant un parcours prédéterminé, dans lequel ladite étape de creusement comprend successivement les étapes suivantes :

- le tunnelier creuse un premier tronçon du tunnel en pente descendante depuis une zone de départ au sol, jusqu'à atteindre une première zone souterraine située à une profondeur prédéterminée sous une première zone du bassin d'aspiration, ladite première zone souterraine constituant une première extrémité de la boucle formée par le tunnel;

- le tunnelier poursuit le creusement du tunnel pour former un deuxième tronçon en direction de l'étendue d'eau, puis pour former un troisième tronçon en arc de cercle suivi d'un quatrième tronçon en direction de la centrale, ledit quatrième tronçon atteignant une deuxième zone souterraine située à une profondeur prédéterminée sous une deuxième zone du bassin d'aspiration, ladite deuxième zone souterraine constituant une deuxième extrémité de la boucle formée par le tunnel ;

et dans lequel on creuse un premier conduit généralement vertical reliant ladite première zone souterraine à ladite première zone du bassin d'aspiration et on creuse un deuxième conduit généralement vertical reliant ladite deuxième zone souterraine à ladite deuxième zone du bassin d'aspiration.

Ladite étape de creusement peut comprendre une troisième étape pendant laquelle le tunnelier creuse un cinquième tronçon du tunnel comprenant une partie en pente ascendante depuis ladite deuxième zone souterraine, jusqu'à une zone d'arrivée au sol par laquelle le tunnelier est évacué du tunnel.

D'autres caractéristiques et avantages de l'invention ressortent dans ce qui va suivre de la description d'exemples non limitatifs de modes de réalisation, en référence aux figures dans lesquelles :

La FIG.1 représente schématiquement une vue de dessus d'une centrale nucléaire en bord de mer, la centrale ayant été modifiée pour y implémenter une installation d'amenée d'eau selon un premier mode de réalisation de l'invention, des flux de circulation d'eau dans l'installation étant représentés pour une situation de fonctionnement normal de la centrale.

La FIG.2 représente schématiquement la vue de dessus de la centrale nucléaire de la FIG.1, les flux de circulation d'eau dans l'installation étant représentés pour une situation de mode de fonctionnement dégradé du tunnel d'aspiration suite à un effondrement, cette situation permettant néanmoins de poursuivre une exploitation normale de la centrale nucléaire.

La FIG.3 représente schématiquement une vue partielle de côté de l'installation d'amenée d'eau représentée sur la FIG.1 ainsi que des différents niveaux de marée à prendre en compte pour la conception.

La FIG.4 représente schématiquement une vue partielle de côté d'un perfectionnement de l'installation d'amenée d'eau représentée sur la FIG.3.

La FIG.5 représente schématiquement une vue partielle de côté d'une installation d'amenée d'eau pour une centrale nucléaire susceptible de subir un raz de marée, avec différents niveaux de la mer à prendre en compte pour la conception.

La FIG.6 représente schématiquement une vue de dessus de la centrale nucléaire de la FIG.1 modifiée pour y implémenter une installation d'amenée d'eau selon un autre mode de réalisation de l'invention.

La FIG.7 représente schématiquement une vue de dessus d'une centrale nucléaire comprenant deux tranches nucléaires alimentées en eau par un même bassin d'aspiration, et comprenant une installation d'amenée d'eau selon l'invention avec un unique tunnel d'aspiration.

La FIG.8 représente schématiquement une vue de dessus d'une centrale nucléaire comprenant au moins trois tranches nucléaires alimentées en eau par un même bassin d'aspiration, et comprenant une installation d'amenée d'eau selon l'invention avec deux tunnels d'aspiration.

La FIG.9 représente schématiquement une vue de dessus d'une centrale nucléaire alimentée en eau par un même bassin d'aspiration, et comprenant une installation d'amenée d'eau selon l'invention avec un tunnel d'aspiration dont les deux extrémités de la partie formant une boucle sont éloignées du bassin d'aspiration.

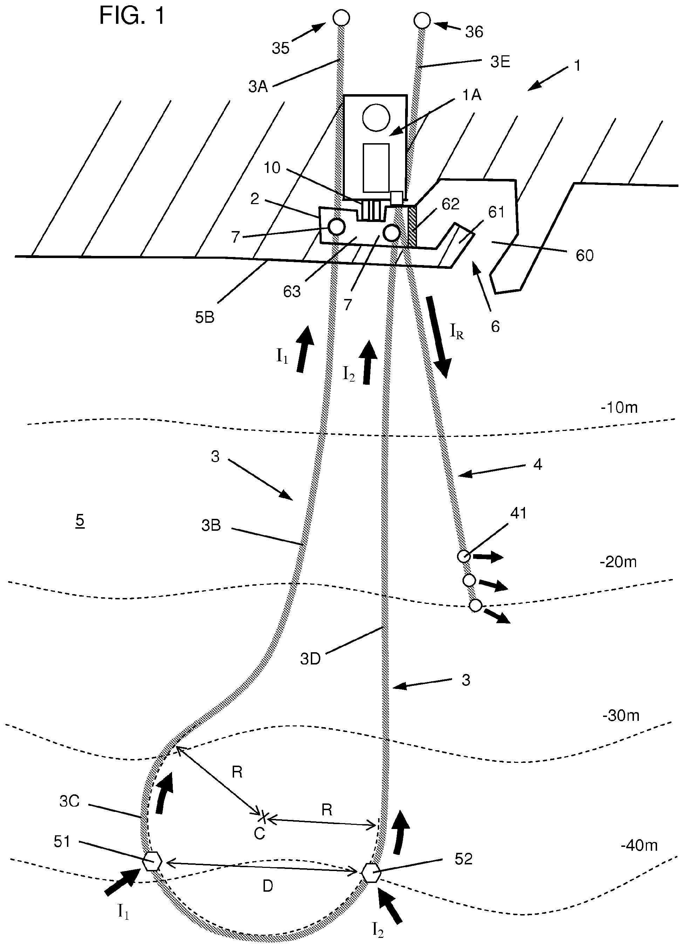

La FIG.1, la FIG.2, et la FIG.3 représentent une même installation d'amenée d'eau selon un premier mode de réalisation de l'invention, et sont commentées conjointement dans ce qui suit. L'installation d'amenée d'eau est réalisée sur le site d'une centrale nucléaire 1 en bord de mer, et vient modifier une installation existante, en vue notamment de diminuer notablement la température de l'eau dans un bassin d'aspiration 2 à partir duquel une station de pompage 10 de la centrale alimente en eau froide au moins un circuit de refroidissement à échangeur de chaleur de la centrale.

Le bassin d'aspiration 2 est situé dans une partie de fond 63 d'un chenal 6 comprenant une partie d'entrée 60 qui communique avec la mer 5. Le chenal 6 est protégé de la mer par une digue 61 située entre le chenal et une bordure de mer 5B. Avant la modification susmentionnée, le bassin d'aspiration communiquait avec la partie d'entrée 60 et était donc alimenté en eau par le chenal. L'eau entrant dans la station de pompage 10 avait donc sensiblement la même température que l'eau en surface du bord de mer.

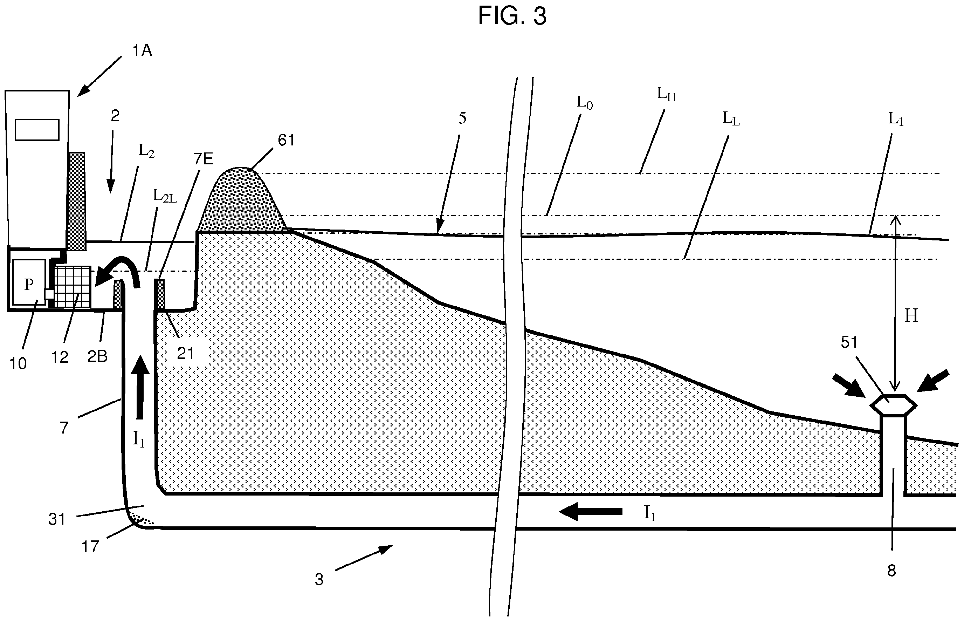

L'installation modifiée comprend une paroi 62, par exemple sous la forme d'un mur de barrage, qui réalise une séparation entre la partie de fond 63 et la partie d'entrée 60 du chenal, de façon à ce que l'eau du bassin d'aspiration 2 ne se mélange pas ou quasiment pas avec l'eau de la partie d'entrée du chenal. L'alimentation en eau du bassin d'aspiration 2 s'effectue grâce à un tunnel souterrain d'aspiration 3 communicant avec le bassin par l'intermédiaire de deux puits réalisés chacun par un conduit 7 généralement vertical qui débouche dans le fond du bassin, comme représenté sur la FIG.3.

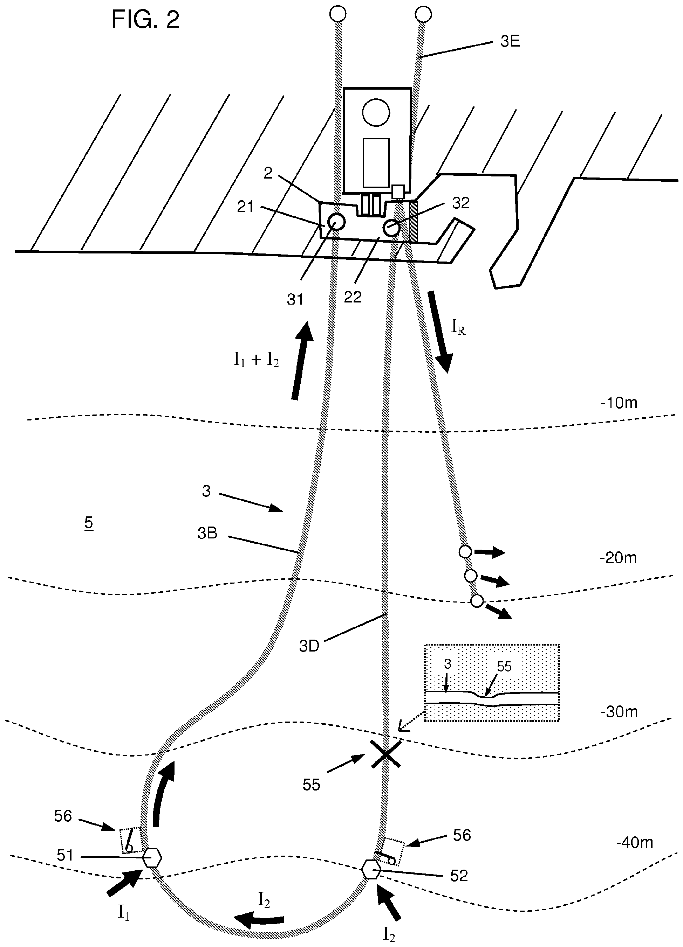

Le tunnel d'aspiration 3 est rendu visible sur les figures 1 et 2 pour les besoins de l'explication, mais il est entendu que ce tunnel est enterré sous le fond marin et n'est donc pas visible depuis la mer. Le tunnel 3 s'étend jusqu'à une certaine distance du bord de mer, de façon à passer sous des fonds atteignant une profondeur prédéterminée par rapport au niveau zéro de la mer (niveau NGF en France) en fonction d'une température maximale que l'on souhaite ne pas dépasser pour l'eau dans le bassin d'aspiration. Quel que soit le type de source froide alimentant le circuit de refroidissement à échangeur de chaleur, le rendement η d'un circuit secondaire de la centrale dépend de la température Tf de la source froide, c'est à dire la température de l'eau à l'entrée des échangeurs de chaleur, et se définit comme suit :

$$\eta = (Tc - Tf)/Tc$$

Tc étant la température de la source chaude, c'est à dire la température de l'eau à la sortie des échangeurs de chaleur. Le rendement η augmente donc avec la diminution de la température Tf de la source froide.

En vue d'améliorer le rendement d'un circuit secondaire d'une installation existante, ou encore dans le cadre d'un projet de centrale nucléaire, la conception des échangeurs de chaleur, ainsi que les besoins pour la conduite normale ainsi que pour la conduite accidentelle de l'installation, imposent une température de la source froide qu'il ne faut pas dépasser.

En fonction de la nature de l'étendue d'eau et de la région d'implantation de la centrale, cette température maximale fixée pour la source froide implique que les entrées d'eau communicant avec le tunnel souterrain d'aspiration doivent être disposées à une profondeur au moins égale à une profondeur minimale prédéterminée.

Par exemple, pour une centrale nucléaire devant être implantée sur un site au bord de la mer méditerranée, si les installations de refroidissement sont dimensionnées de façon à ce que la température maximale de la source froide soit fixée à 20°C, la profondeur minimale de prise d'eau est d'environ 35 mètres sous le niveau zéro de la mer, ce qui se situe dans la couche de thermocline. Cela signifie que durant la période de l'année où la mer est la plus chaude, à savoir généralement durant les mois d'aout et septembre, il faut atteindre environ 35 mètres de profondeur pour que la température de l'eau ne dépasse jamais 20°C.

Par ailleurs, une installation de refroidissement d'une tranche de centrale nucléaire se caractérise par une température de source froide optimale en fonctionnement, qui est inférieure à la température maximale fixée pour l'installation. Par exemple, avec une température maximale de la source froide fixée à 20°C, la température optimale de fonctionnement peut être d'environ 15°C. A partir de courbes de thermocline de la mer, c'est-à-dire des courbes représentatives chacune d'une période donnée de l'année (par exemple pour chaque mois) et montrant la relation entre une profondeur donnée et la température de l'eau à cette profondeur, on peut déterminer qu'il faut atteindre environ 70 mètres de profondeur pour que la température de l'eau ne dépasse jamais 15°C, ce qui se situe encore dans la couche de thermocline. A une telle profondeur, la température de l'eau varie très peu pendant l'année, et par exemple ne descendra pas en dessous de 13°C durant les mois les plus froids. On comprend donc qu'il n'est pas conseillé dans cet exemple de chercher à aspirer l'eau à des profondeurs supérieures à environ 70 mètres en vue d'améliorer encore le rendement, car le coût supplémentaire de construction du tunnel serait trop important par rapport à la faible amélioration du rendement.

La profondeur à laquelle on obtient le meilleur rapport entre le coût de construction de l'installation d'amenée d'eau et le rendement escompté pour l'installation peut être déterminée en connaissant des estimations du coût de construction en particulier du tunnel d'aspiration 3 à différentes profondeurs, en connaissant en outre le rendement de l'installation en fonction de la température de la source froide, et en utilisant des courbes de thermocline de la mer.

Dans le cas d'une nouvelle centrale nucléaire en bord de mer, ce coût de construction est à comparer au coût de construction d'une centrale avec une installation de refroidissement classique dans laquelle l'eau du bassin d'aspiration est amenée par un chenal. Une nouvelle centrale avec une installation de refroidissement selon l'invention sera généralement plus coûteuse globalement du fait de la construction du tunnel d'aspiration. Néanmoins, des économies seront réalisées notamment sur les échangeurs de chaleur et les pompes de circulation, incluant le génie civil associé, qui peuvent être dimensionnés plus petits du fait de la diminution de la température maximale de la source froide. En outre, l'aspiration de l'eau en profondeur permet de s'affranchir de diverses pollutions telles que chimiques, végétales (algues) ou par des objets flottants, ce qui simplifie les systèmes de filtration et diminue leurs coûts de construction et de maintenance.

Le coût de construction supplémentaire d'une nouvelle centrale avec une installation de refroidissement selon l'invention ne sera donc pas nécessairement très élevé. En outre, l'amélioration du rendement de l'installation, pendant tout ou partie de l'année selon la région, permet de dégager des marges de fonctionnement plus importantes et améliore ainsi la rentabilité de l'installation, en particulier dans des régions où la température de la mer en surface dépasse souvent 25°C. Le remboursement du coût de construction supplémentaire par la rentabilité améliorée de l'installation pourra donc être relativement rapide au regard de la durée de vie escomptée de la centrale, ce qui à plus ou moins long terme se traduira par une diminution du coût total prenant en compte la construction et l'exploitation.

Dans l'exemple de réalisation représenté sur la FIG.1, le tunnel d'aspiration 3 passe sous des fonds marins atteignant une profondeur de l'ordre de 40 mètres par rapport au niveau zéro de la mer, et est relié à deux entrées d'eau 51 et 52 distantes l'une de l'autre d'une distance D au moins égale à 100 mètres. Une distance de l'ordre d'au moins 100 mètres minimise le risque de défaillance simultanée des deux entrées d'eau. Par exemple, il est extrêmement peu probable qu'un bateau qui viendrait sombrer dans la zone des entrées d'eau endommage à la fois les deux entrées 51 et 52 compte tenu de leur éloignement mutuel. Chaque entrée d'eau est immergée quelques mètres au dessus du fond marin de façon à ne pas aspirer de sédiments dans le tunnel d'aspiration 3, et est située au niveau d'une extrémité supérieure d'un puits d'aspiration 8 essentiellement vertical raccordé au tunnel d'aspiration comme représenté sur la FIG.3. La profondeur H d'une entrée d'eau 51 ou 52 par rapport au niveau zéro $L_0$ de la mer peut avoir été déterminée comme susmentionné de façon à obtenir le meilleur rapport entre le coût de construction de l'installation d'amenée d'eau et le rendement escompté pour l'installation.

Le tunnel d'aspiration 3 forme une boucle présentant deux extrémités 31 et 32 qui communiquent chacune avec le bassin d'aspiration 2, comme représenté sur la FIG.2 et la FIG.3. Chaque extrémité 31 ou 32 de la boucle du tunnel se situe à la verticale sous une zone correspondante respectivement 21 ou 22 du bassin d'aspiration, et communique avec le bassin d'aspiration par l'intermédiaire d'un conduit 7 généralement vertical. Comme représenté sur la FIG.3, une extrémité 31 ou 32 de la boucle du tunnel peut former un coude avec le conduit vertical 7, ce qui permet de piéger au fond du coude les éventuels sédiments 17 qui auraient été aspirés dans le tunnel. Afin de ne pas créer de perte de charge inutile dans le circuit jusqu'au bassin d'aspiration, le diamètre intérieur d'un conduit vertical 7 est avantageusement au moins égal au diamètre intérieur du tunnel 3. Ce dernier est par exemple de l'ordre de 5 mètres.

La boucle formée par le tunnel d'aspiration 3 s'étend dans un plan horizontal, ce qui permet à la construction de faciliter le travail du tunnelier le long de la boucle en évitant de devoir gérer l'avancement et l'évacuation de la terre sur un sol en pente. Il est néanmoins envisageable de prévoir une boucle avec des parties en pente, par exemple pour s'adapter à une géologie particulière du sous sol. Une pente très légèrement ascendante en direction des puits d'aspiration 8 permettrait s'il en était besoin de vider l'eau du tunnel, par exemple pour une réparation exceptionnelle durant un arrêt de la centrale 1, en obturant d'abord les entrées d'eau 51 et 52 et en pompant l'eau au niveau des extrémités 31 et 32 de la boucle qui constitueraient les points les plus bas du tunnel. Toutefois, comme expliqué plus loin, la conception du tunnel ne nécessite normalement pas de devoir vider l'eau pour intervenir en cas de dommage dans le tunnel. Inversement, une pente descendante en direction des puits d'aspiration 8, par exemple avec une inclinaison entre 10° et 20°, permettrait de diminuer la hauteur nécessaire de chaque conduit vertical 7 et de raccourcir quelque peu la longueur totale du circuit. En l'état actuel des techniques de creusement par tunnelier, le creusement d'une boucle de tunnel s'étendant dans un plan sensiblement horizontal semble la solution la plus simple.

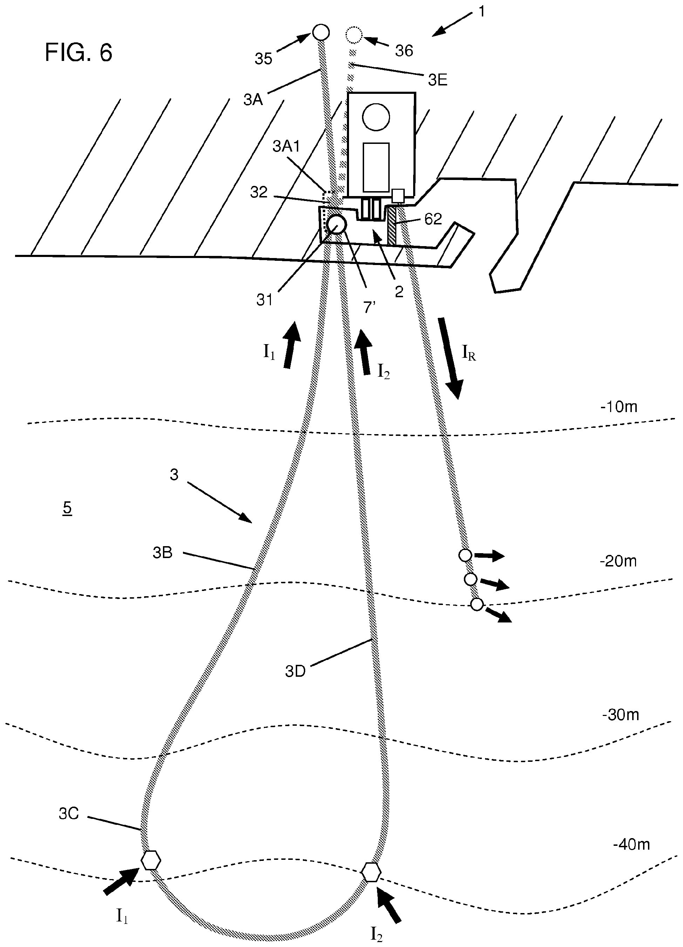

Le tunnel d'aspiration 3 présente un tronçon en courbe 3C ayant un rayon de courbure R compris entre 50 mètres et 300 mètres. Avantageusement, ce tronçon en courbe 3C forme un arc de cercle de centre C et de rayon R s'étendant sur plus d'un demi-cercle, afin de minimiser la longueur totale du tunnel compte tenu que les extrémités 31 et 32 de la boucle sont relativement proches ou peuvent même coïncider (cf. FIG.6). Un tunnel ayant au moins un tronçon en courbe peut être construit grâce aux techniques actuelles de creusement par tunnelier en utilisant des voussoirs de renforcement des parois creusées par le tunnelier. Les voussoirs sont des blocs de béton préformés et résistants individuellement. Pour former un module de renforcement sur 360°, c'est-à-dire ayant la forme d'un anneau, on peut utiliser quatre voussoirs identiques et un voussoir additionnel formant une clé de voute, raccordés entre eux par des joints en élastomère. La longueur d'un module de renforcement est par exemple de l'ordre de un à deux mètres pour un diamètre intérieur de cinq mètres.

Les modules de renforcement qui se succèdent le long du tunnel sont également raccordés entre eux par des joints en élastomère, et sont décalés angulairement deux à deux autour de l'axe du module de façon à ne pas aligner deux clés de voute consécutives. La relative souplesse du raccordement par des joints en élastomère permet également de créer un léger désalignement entre les axes de deux modules consécutifs, ce qui permet de construire au moins un tronçon de tunnel ayant une certaine courbure. Les techniques actuelles pour des tunnels destinés à la circulation de véhicules permettent un rayon de courbure de l'ordre de 150 mètres sans compromettre la tenue mécanique de la paroi du tunnel assurée par l'ensemble des voussoirs. Pour un tunnel d'aspiration tel que décrit dans la présente, un rayon de courbure inférieur est envisageable, notamment du fait que les contraintes de tenue mécanique sont un peu moins importantes une fois le tunnel rempli d'eau.

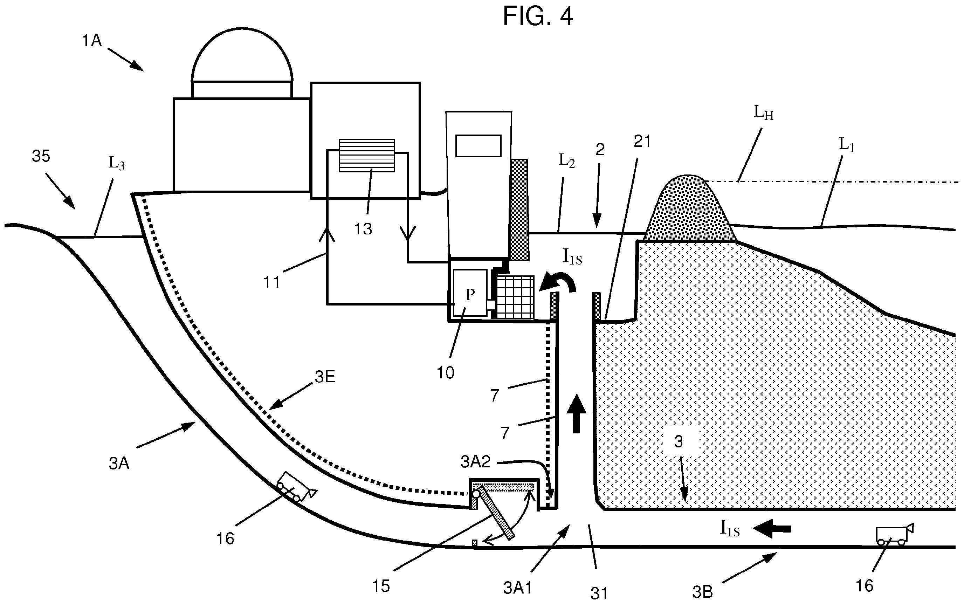

Le creusement du tunnel d'aspiration 3 peut être opéré par un tunnelier qui effectue successivement les étapes suivantes. Lors d'une première étape, le tunnelier est mis en place sur une zone de départ au sol 35 située à une certaine distance du bassin d'aspiration 2 et de la tranche nucléaire 1A, l'éloignement de la zone de départ au sol par rapport au bassin d'aspiration étant fonction notamment de la profondeur à laquelle le tunnelier doit passer sous le bassin. Le tunnelier creuse un premier tronçon 3A du tunnel en pente descendante en direction de la mer, jusqu'à atteindre une première zone souterraine 3A1 située à une profondeur prédéterminée sous une première zone 21 du bassin d'aspiration, comme représenté sur la FIG.2 et la FIG.4. La première zone souterraine 3A1 constitue la première extrémité 31 de la boucle formée par le tunnel. Lors d'une deuxième étape consistant à former la boucle du tunnel, le tunnelier poursuit le creusement du tunnel pour former un deuxième tronçon 3B sensiblement en direction de l'endroit où sera implantée une première entrée d'eau immergée 51, puis pour former un troisième tronçon 3C en arc de cercle passant sous l'endroit prévu de la première entrée d'eau 51 et sous l'endroit prévu d'une deuxième entrée d'eau 52, suivi d'un quatrième tronçon 3D en direction de la centrale 1. Le quatrième tronçon 3D est destiné à atteindre une deuxième zone souterraine 3A2 située à une profondeur prédéterminée sous une deuxième zone 22 du bassin d'aspiration. La deuxième zone souterraine 3A2 constitue la deuxième extrémité 32 de la boucle formée par le tunnel, et se situe sensiblement à la même profondeur que la première zone souterraine 3A1.

Lors d'une troisième étape du creusement, le tunnelier creuse un cinquième tronçon 3E du tunnel en pente ascendante depuis la deuxième zone souterraine 3A2, jusqu'à une zone d'arrivée au sol 36 par laquelle le tunnelier peut être évacué. On notera que cette troisième étape n'est pas indispensable à la réalisation du tunnel. Il peut être prévu par exemple que le tunnelier abandonne sa tête de forage après avoir creusé la deuxième zone souterraine 3A2, puis parcoure le tunnel en marche arrière pour ressortir par la zone de départ au sol 35. Le creusement d'un premier tronçon 3A ou d'un cinquième tronçon 3E du tunnel devra être effectué de façon à ne pas affaiblir le terrain en particulier sous l'îlot nucléaire. Il est donc hautement préférable que les tronçons du tunnel passent sous des zones à l'écart des installations sensibles d'une tranche nucléaire.

Afin de faire communiquer le bassin d'aspiration 2 avec les première et deuxième extrémités 31 et 32 de la boucle formée par le tunnel, on creuse un premier conduit généralement vertical 7 reliant la première zone souterraine 3A1 à la première zone 21 du bassin d'aspiration, et on creuse de même un deuxième conduit généralement vertical 7 reliant la deuxième zone souterraine 3A2 à la deuxième zone 22 du bassin d'aspiration. Les parois de ces conduits 7 sont bétonnées, ou peuvent être formées par des tubes métalliques. On notera que les premier et deuxième conduits 7 peuvent être creusés avant, pendant, ou après le creusement du tunnel. Au moins un des premier et cinquième tronçons respectivement 3A et 3E du tunnel peut être rebouché après le creusement du tunnel, comme c'est le cas dans la réalisation représentée sur la FIG.3. On peut aussi prévoir de conserver au moins un des premier et cinquième tronçons 3A et 3E et d'en bétonner les parois, afin de créer un tunnel d'entretien permettant un accès facilité pour l'inspection et l'entretien du tunnel, comme c'est le cas dans la réalisation représentée sur la FIG.4 et commentée plus loin dans la description.

En alternative, le tunnel d'aspiration 3 peut être creusé après le creusement d'un puits pour le conduit généralement vertical 7, et le tunnelier peut être mis en place par éléments successifs introduits jusqu'au fond du puits, en particulier la partie de forage suivie de wagons. Il n'est donc pas indispensable de creuser un premier tronçon du tunnel en pente descendante tel que le tronçon 3A susmentionné.

Dans ce qui suit, on suppose que l'étendue d'eau 5 est une mer soumise à des marées. Il est entendu que la réalisation décrite est également adaptée à une étendue d'eau ne présentant pas de variation substantielle de niveau. Chaque paroi d'un conduit 7 débouche dans le bassin d'aspiration 2 à un niveau qui se situe substantiellement en dessous du niveau $L_L$ de plus basse marée lors des plus forts coefficients de marée, cf. FIG.3. En effet, l'alimentation du bassin d'aspiration par l'eau puisée dans la mer s'effectue par l'équilibrage des niveaux dû à la pression atmosphérique. Compte tenu des pertes de charges dans les puits d'aspiration 8 et dans le tunnel, le niveau $L_2$ de l'eau dans le bassin d'aspiration se situe à une certaine hauteur qui peut atteindre plusieurs centimètres voire dizaines de centimètres en dessous du niveau $L_1$ de la mer mesuré au dessus des entrées d'eau 51 et 52, le niveau $L_1$ considéré étant moyenné entre les sommets et les creux des vagues de houle. Lorsque le niveau $L_1$ de la mer atteint le niveau $L_L$ de plus basse marée, le niveau $L_2$ de l'eau dans le bassin d'aspiration atteint un niveau $L_{2L}$ qui doit se situer à une certaine hauteur au dessus de l'embouchure 7E d'un conduit 7, afin de ne pas risquer un vidage progressif du bassin d'aspiration par les pompes de fonctionnement normal de la station de pompage 10. La hauteur du bassin d'aspiration est prévue de façon à ce que lorsque le niveau $L_1$ de la mer atteint le niveau $L_H$ de plus haute marée lors des plus forts coefficients de marée, l'eau ne déborde pas du bassin d'aspiration.

Avantageusement, l'embouchure 7E d'un conduit 7 se situe à une hauteur prédéterminée au dessus du fond 2B du bassin d'aspiration, de façon à ce qu'en cas de baisse exceptionnelle de l'étendue d'eau 5 sous le niveau $L_L$ comme cela peut se produire par exemple en bord de mer dans certaines régions sujettes à des tsunamis, une certaine réserve d'eau reste disponible dans le bassin d'aspiration. Cela permet d'avoir le temps d'arrêter la production électrique de la tranche nucléaire, et de commuter les pompes de fonctionnement normal de la station de pompage 10 sur des pompes de fonctionnement de sauvegarde, sans risquer une rupture de l'alimentation en eau des pompes.

Pendant une phase d'exploitation normale de la tranche 1A de la centrale nucléaire 1, et avec un tunnel d'aspiration 3 complètement opérationnel, comme représenté sur la FIG.1 et la FIG.3, les entrées d'eau 51 et 52 permettent au tunnel d'aspirer des flux d'eau respectivement $I_1$ et $I_2$ dont le débit est fonction du débit d'aspiration de la station de pompage 10. Si en fonctionnement normal la tranche nucléaire 1A en pleine puissance a besoin par exemple d'environ 70 m3 d'eau par seconde pour assurer son refroidissement, le débit de chaque flux $I_1$ ou $I_2$ est d'environ 35 m3 d'eau par seconde. Par ailleurs, la station de pompage comprend de façon connue des pompes pour faire circuler l'eau en sortie du circuit de refroidissement à échangeur de chaleur dans un tunnel de rejet 4 qui aboutit à des bouches de sorties sous-marines 41 situées à distance des entrées d'eau. Le débit du flux $I_R$ de l'eau rejetée par le tunnel de rejet 4 est normalement égal à la somme des débits des flux $I_1$ et $I_2$.

Dans le cas d'un endommagement local du tunnel 3, par exemple au niveau d'une zone 55 du tunnel qui subirait un effondrement comme représenté schématiquement sur la FIG.2, des voussoirs de renforcement des parois du tunnel tels que mentionnés précédemment peuvent se déplacer dans une direction transverse au tunnel. Cela peut entraîner localement un rétrécissement de la section intérieure du tunnel. Des études effectuées par la demanderesse permettent de supposer que dans les cas d'effondrement les plus graves envisagés pour un tunnel de diamètre intérieur de l'ordre de 5 mètres, la section intérieure du tunnel dans la zone endommagée resterait suffisante pour permettre un débit par exemple d'au moins 5 m3 d'eau par seconde et supérieur au débit de sauvegarde requis par les pompes de fonctionnement de sauvegarde de la station de pompage 10. Un débit de sauvegarde de l'ordre de 4 m3 d'eau par seconde est généralement suffisant pour assurer les besoins d'alimentation en eau d'une station de pompage d'une tranche nucléaire dont la production électrique est arrêtée.

Dans le cas où comme représenté sur la FIG.2 un seul tronçon du tunnel est affecté par une zone d'effondrement 55, et même à supposer que la section intérieure du tunnel soit fortement diminuée dans la zone d'effondrement 55, il est possible de poursuivre une exploitation normale de la tranche nucléaire 1A. En effet, dans l'exemple représenté, le débit d'aspiration de la station de pompage 10 en fonctionnement normal est d'environ 70 m3 d'eau par seconde, ce qui implique environ 35 m3 d'eau par seconde par branche du tunnel. Même à supposer que la zone d'effondrement 55 laisse passer un débit seulement de l'ordre de 5 m3 d'eau par seconde dans la branche du tunnel entre la deuxième entrée d'eau 52 et la deuxième extrémité 32, la partie de la boucle du tunnel depuis la deuxième entrée d'eau 52 jusqu'à la première extrémité 31 de la boucle n'est pas endommagée et permet d'alimenter en eau le bassin d'aspiration 2 avec le débit requis d'environ 70 m3 d'eau par seconde.

Les deux entrées d'eau 51 et 52 n'étant pas endommagées, le débit d'alimentation du bassin d'aspiration 2 reste réparti de façon à peu près égale sur chaque entrée d'eau, de telle sorte que chaque flux $I_1$ ou $I_2$ est d'environ 35 m3 d'eau par seconde pour un débit d'aspiration du bassin d'environ 70 m3 d'eau par seconde. En outre, à supposer que l'une quelconque des deux entrées d'eau 51 et 52 vienne à être endommagée, l'installation d'amenée d'eau est conçue de façon à ce que l'autre entrée d'eau 51 ou 52 puisse fournir à elle seule le débit d'aspiration requis pour poursuivre l'exploitation normale de la tranche nucléaire. Le dimensionnement de chaque entrée d'eau 51 ou 52 et du puits d'aspiration 8 associé est donc prévu en conséquence. Ainsi, malgré un fonctionnement du tunnel d'aspiration 3 dans un mode qui peut être qualifié de dégradé, une exploitation normale de la tranche nucléaire 1A peut être poursuivie.

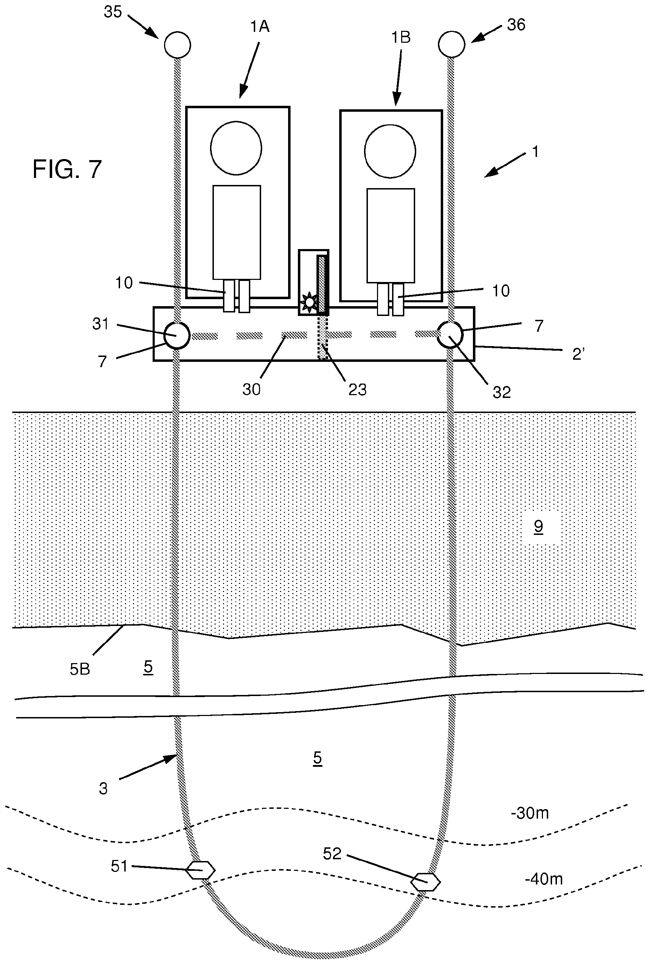

Une telle conception de l'installation d'amenée d'eau peut également s'appliquer dans une configuration de la centrale 1 où les circuits de refroidissements de plusieurs tranches nucléaires sont alimentés en eau par un même bassin d'aspiration. Un exemple d'une telle configuration est représenté sur la FIG.7 et est commenté plus loin dans la description. On comprend donc que de manière générale, le tunnel d'aspiration 3 et chacune des entrées d'eau 51 et 52 sont dimensionnés de façon à ce que l'alimentation du bassin d'aspiration par une seule et quelconque des deux extrémités 31 et 32 du tunnel d'aspiration et à partir d'une seule et quelconque des entrées d'eau soit suffisante pour alimenter en eau la totalité des stations de pompage 10 de l'installation d'amenée d'eau en fonctionnement normal de la totalité des tranches nucléaires de la centrale.

Il est possible de viser une sécurité maximale dans le cadre de certaines opérations de maintenance et d'éventuelles réparations que l'on souhaite effectuer dans le tunnel sans interrompre le fonctionnement normal de la tranche ou des tranches nucléaires alimentées en eau par le tunnel. Par exemple, pour la réparation de la zone d'effondrement 55 du tunnel sans arrêter la tranche 1A, et en vue de rétablir une section intérieure du tunnel équivalente à celle d'origine dans cette zone 55, il est envisageable de prévoir à la construction du tunnel des portions de tunnel munies de vannes 56 adjacentes aux puits d'aspiration 8 associés aux entrées d'eau 51 et 52. Une vanne 56 peut être du type à porte pivotante disposée dans un renfoncement sur un côté du tunnel, et actionnable depuis l'extérieur du tunnel par un plongeur ou un robot sous-marin après avoir déverrouillé des mécanismes de sécurité. Un puits d'intervention pour l'accès à la vanne peut être prévu accolé à un puits d'aspiration 8.

Dans l'exemple de la FIG.2, on ferme la vanne 56 adjacente au puits d'aspiration de l'entrée d'eau 52 après avoir détecté par tout moyen approprié que le débit d'eau a substantiellement diminué dans le conduit 7 associé à l'extrémité 32 de la boucle. La fermeture de cette vanne 56 permet d'éviter tout risque qu'un robot, un plongeur, voire du matériel, introduit dans le tronçon 3D du tunnel depuis le tunnel d'entretien 3E pour inspecter et réparer ce tronçon, vienne jusqu'au puits d'aspiration de l'entrée d'eau 52 et soit déplacé vers le tronçon 3B du tunnel par le courant d'aspiration correspondant au flux d'eau $I_2$. Une fois dans la branche du tunnel entre la première entrée d'eau 51 et la première extrémité 31, le débit du courant d'aspiration est multiplié par deux, et un plongeur en particulier risquerait de se faire aspirer jusqu'au système de filtration 12 du bassin d'aspiration, cf. Fig.3. Une vanne 56 n'est pas nécessairement étanche, et peut comprendre une grille calibrée pour retenir les objets ou personnes qui iraient trop loin au delà de la zone d'effondrement 55. Néanmoins, une vanne 56 relativement étanche permet de limiter fortement le débit d'eau entre la deuxième entrée d'eau 52 et la deuxième extrémité 32 de la boucle, ce qui peut être avantageux pour une réparation sur la zone d'effondrement 55 sans subir un courant d'eau gênant.

Comme représenté sur la FIG.4, les premier et cinquième tronçons 3A et 3E creusés par le tunnelier ont été conservés afin de disposer d'un premier et d'un deuxième tunnels d'entretien pour accéder depuis le sol à respectivement les première et deuxième extrémités 31 et 32 de la boucle du tunnel. Sur la FIG.4, le cinquième tronçon 3E est situé derrière le premier tronçon 3A et est représenté partiellement en pointillés. Les dimensions des deux tunnels d'entretien peuvent être identiques. Il peut être prévu de faire inspecter les parois du tunnel par au moins un véhicule robotisé sous marin 16 adapté pour se déplacer sur un rail ou une piste de guidage prévue à cet effet le long du tunnel, le véhicule d'inspection étant par exemple muni de projecteurs de lumière et d'appareils d'enregistrement d'images et étant éventuellement capable de communiquer avec un poste de contrôle. L'inspection complète du tunnel peut être effectuée en amenant le véhicule d'inspection 16 par le premier tunnel d'entretien 3A et en faisant ressortir le véhicule par le deuxième tunnel d'entretien 3B.

Cette opération d'inspection du tunnel peut être prévue réalisable pendant l'aspiration normale dans le bassin d'aspiration 2 par les pompes de fonctionnement normal de la station de pompage 10, mais le véhicule d'inspection 16 doit alors remonter la première branche du tunnel à l'encontre d'un courant d'aspiration par exemple de l'ordre de 35 m3 d'eau par seconde, ce qui correspond à une vitesse du courant d'environ 1,8 mètres par seconde pour un diamètre utile du tunnel d'environ 5 mètres. La puissance et l'autonomie d'un véhicule d'inspection 16 doivent donc être adaptées en conséquence. Dans la mesure du possible, il est préférable d'effectuer l'inspection complète du tunnel pendant une phase d'arrêt de la production électrique d'une tranche nucléaire impliquant une aspiration d'eau uniquement par les pompes de fonctionnement de sauvegarde de la station de pompage 10 associée au bassin d'aspiration. Le courant d'aspiration d'eau $I_{1S}$ est alors réduit, par exemple à environ 2 m3 d'eau par seconde pour chaque branche du tunnel, ce qui implique une vitesse du courant d'environ 0,1 mètres par seconde c'est-à-dire très faible. Dans ces conditions de très faible courant d'aspiration d'eau, des plongeurs peuvent intervenir en sécurité sans risque d'être entraînés par le courant.

Les premier deuxième tunnels d'entretien 3A et 3E communiquent chacun avec respectivement les première et deuxième zones souterraines 3A1 et 3A2. De ce fait, à l'emplacement de chaque zone de départ ou d'arrivée au sol 35 ou 36, l'eau dans le tunnel d'entretien présente un niveau $L_3$ qui correspond sensiblement au niveau $L_2$ dans le bassin d'aspiration. Une zone au sol 35 ou 36 peut être prévue surélevée de façon à ce qu'un niveau $L_3$ élevé n'inonde pas la centrale. A l'inverse, si à l'emplacement d'une zone au sol 35 ou 36, le tunnel d'entretien débouche à une altitude nettement inférieure au niveau $L_H$ de plus haute marée lors des plus forts coefficients de marée, comme c'est le cas dans la réalisation représentée sur la FIG.4, l'emplacement risque d'être inondé pendant les hautes marées. Il est possible de prévoir dans le tunnel d'entretien une vanne 15 par exemple du type à porte pivotante disposée dans un renfoncement sur un côté du tunnel, et actionnable par exemple depuis l'intérieur du tunnel par un plongeur. La vanne 15 peut fonctionner comme un clapet, ce qui implique que le niveau $L_3$ de l'eau dans le tunnel d'entretien ne dépassera pas substantiellement le niveau de la marée basse pendant la période considérée. L'étanchéité d'une vanne 15 n'est pas nécessairement très bonne. L'ouverture forcée d'une vanne 15 pour le passage d'un véhicule d'inspection 16 ou de plongeurs s'effectuera à marée suffisamment basse pour ne pas risquer d'inonder une zone 35 ou 36.

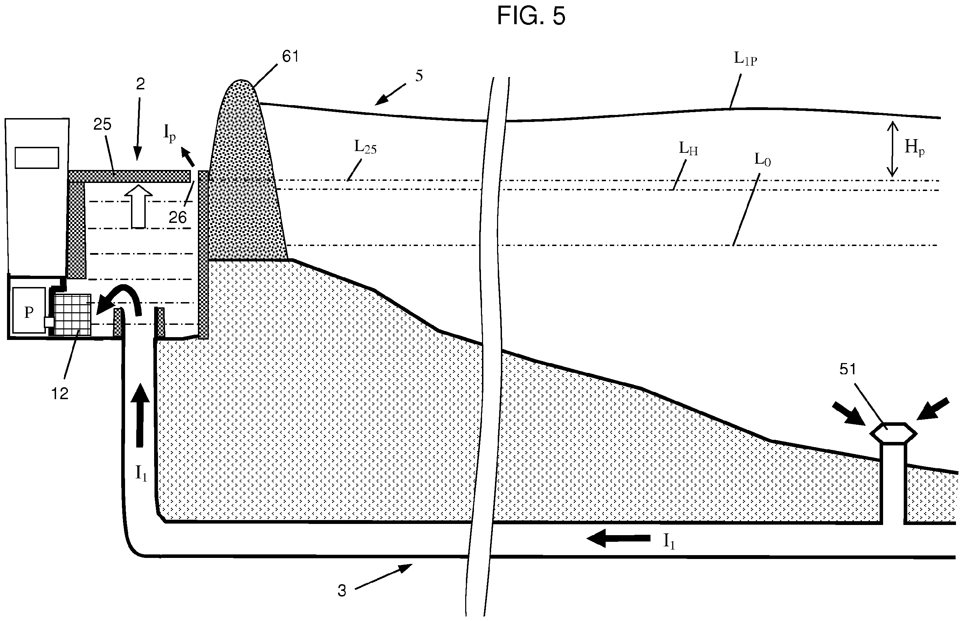

Comme représenté sur la FIG.5, une installation d'amenée d'eau selon l'invention peut être adaptée pour une centrale nucléaire située à côté d'une étendue d'eau susceptible de connaître une montée des eaux inhabituelle. On entend par montée des eaux inhabituelle un raz de marée tel que provoqué par exemple par un tsunami, ou encore une crue exceptionnelle d'un fleuve. Une installation d'amenée d'eau telle que représenté sur la FIG.1 nécessite relativement peu d'aménagements pour résister à une montée des eaux inhabituelle. La digue 61 doit être prévue d'une hauteur suffisante pour ne pas être submergée par les plus hautes vagues estimées à une hauteur $L_{1P}$, cf. FIG.5. Par ailleurs, la digue 61 doit protéger complètement la centrale, et il n'est donc plus question d'une ouverture sur la mer telle que par un chenal.

Afin d'éviter un débordement incontrôlé du bassin d'aspiration 2, le bassin est couvert par un dispositif formant un couvercle 25 essentiellement étanche à l'eau. Des ouvertures calibrées 26 peuvent être réalisées dans le couvercle 25 ou à proximité par exemple dans une paroi latérale du bassin, entre le bassin et son environnement extérieur. De cette façon, en cas de remplissage complet du bassin dû à une montée des eaux inhabituelle, les ouvertures calibrées 26 laissent passer un flux d'eau limité $I_p$ depuis le bassin d'aspiration vers l'environnement extérieur, ce flux pouvant être canalisé vers une zone intermédiaire de rejet avant d'être rejeté dans la mer.

La pression de l'eau dans le bassin d'aspiration 2 au niveau du couvercle 25 est fonction notamment de la hauteur $H_p$ de la mer à la verticale des entrées d'eau 51 et 52 par rapport à un niveau de référence $L_{25}$ correspondant à l'altitude du couvercle 25. En fonction du flux d'eau $I_p$ passant par les ouvertures calibrées 26, la dépressurisation dans le bassin d'aspiration 2 sera plus ou moins importante. Il est envisageable de se passer des ouvertures 26, mais en particulier les structures du bassin 2, du couvercle 25, et du système de filtration 12, devront supporter la pression supplémentaire. Une hauteur $H_p$ de l'ordre de 10 mètres impliquerait une pression proche de 1 bar appliquée sur la face inférieure du couvercle 25 comme à l'endroit indiqué par la flèche, à pondérer par les pertes de charges dans le tunnel. Par ailleurs, si la montée des eaux est due à un tsunami, et dans le cas où aucun tremblement de terre précédant le tsunami ne serait ressenti dans la centrale, il est envisageable de ne pas arrêter la tranche nucléaire et donc de ne pas arrêter les pompes de fonctionnement normal de la station de pompage 10 pendant la montée des eaux.

Il est possible d'aménager l'installation d'amenée d'eau décrite ci-dessus en référence à la FIG.5, pour y implémenter la réalisation décrite précédemment en référence à la FIG.4 relativement à au moins un tunnel d'entretien pour accéder à la boucle du tunnel depuis le sol. Dans ce cas, une vanne telle que la vanne 15, positionnée éventuellement au niveau de la zone du départ au sol 35, permettra d'empêcher une inondation de la centrale par le tunnel d'entretien pendant la montée des eaux. Par ailleurs, afin que la montée des eaux n'inonde pas la centrale par un puits de rejet qui alimente un tunnel de rejet tel que le tunnel 4 en référence à la FIG.1, le ou les puits de rejet de la station de pompage peuvent être munis chacun d'un dispositif de couvercle analogue à celui formant le couvercle 25 et comprenant éventuellement des ouvertures calibrées de dépressurisation.

Sur la FIG.6, l'installation d'amenée d'eau représentée diffère de celle correspondant à la FIG.1 essentiellement en ce que les première et deuxième extrémités 31 et 32 de la boucle du tunnel sont quasiment en coïncidence au niveau d'une même cavité souterraine 3A1 située sous le bassin d'aspiration 2. Les première et deuxième extrémités 31 et 32 communiquent avec le bassin d'aspiration par l'intermédiaire d'un unique conduit 7' généralement vertical qui relie la cavité souterraine 3A1 au bassin d'aspiration. Pour le creusement du tunnel, il peut être prévu de faire ressortir le tunnelier par un tronçon de sortie 3E jusqu'à une zone d'arrivée au sol 36 par laquelle le tunnelier peut être évacué, comme décrit en à référence la FIG.1, ou encore de rediriger le tunnelier dans la cavité souterraine 3A1 de façon à le faire ressortir par le tronçon de départ 3A jusqu'à la zone de départ au sol 35.

Un avantage d'une telle réalisation est de ne nécessiter qu'un seul conduit d'aspiration 7'. Néanmoins, en cas de réparation à effectuer dans le tunnel, comme par exemple la réparation d'une zone d'effondrement 55 du tunnel telle que décrite en référence à la FIG.1, il pourra s'avérer nécessaire de commuter les pompes de fonctionnement normal de la station de pompage sur les pompes de fonctionnement de sauvegarde afin de pouvoir accéder à la branche endommagée du tunnel 3 par un tunnel d'entretien 3A ou 3E sans risque d'être aspiré dans le conduit d'aspiration 7'.

Sur la FIG.7, la centrale nucléaire représentée diffère de celle correspondant à la FIG.1 essentiellement en ce qu'elle comprend deux tranches nucléaires 1A et 1B alimentées en eau par un même bassin d'aspiration 2'. Il est entendu que l'invention n'est pas limitée à un bassin d'aspiration formant un volume continu. Par même bassin d'aspiration, on entend également un ensemble de bassins éloignés les uns des autres et communicant entre eux par exemple par des canaux ou des conduits éventuellement munis de vannes, de telle façon que le niveau d'eau dans les bassins soit le même ou que la différence entre les niveaux d'eau des bassins ne dépasse pas une hauteur prédéterminée. Dans la réalisation représentée, le bassin d'aspiration 2' alimente en eau deux stations de pompage 10 affectées chacune à une tranche de la centrale. L'installation d'amenée d'eau est similaire à celle décrite en référence à la FIG.1. On notera que la centrale nucléaire est séparée du bord de mer 5B par une bande de terre 9, correspondant par exemple à une zone de littoral non constructible. Par souci de simplicité, l'installation de rejet de l'eau réchauffée par les échangeurs de chaleur n'est pas représentée.

De façon optionnelle, on peut prévoir une vanne 23 apte à séparer le bassin d'aspiration 2' en deux parties, et éventuellement un tunnel de liaison 30 tel que représenté en pointillés sous le bassin et reliant les première et deuxième extrémités 31 et 32 du tunnel d'aspiration 3. La vanne 23 peut être du type à porte de relevage avec un dispositif de relevage disposé au dessus d'une zone médiane du bassin, et être prévue pour rester ouverte pendant le fonctionnement normal des deux tranches nucléaires 1A et 1B. Sa fermeture peut être décidée en cas d'arrêt d'une seule tranche, de façon à pouvoir intervenir par exemple pour une maintenance sur la station de pompage dans la partie du bassin d'aspiration de la tranche arrêtée, sans risquer une aspiration depuis cette partie du bassin vers la station de pompage de la tranche en activité. Dans cette configuration, le tunnel de liaison 30 n'est pas indispensable, mais apporte néanmoins une sécurité supplémentaire pour l'alimentation en eau de la partie active du bassin d'aspiration 2', en l'occurrence par la première extrémité 31 du tunnel, sans nécessiter de rouvrir la vanne 23 . Cela permet de satisfaire le critère de défaillance unique même pendant une intervention de maintenance sur une tranche arrêtée, alors que l'autre des deux tranches reste en activité.

En alternative, il est possible de séparer de façon permanente le bassin d'aspiration 2' en deux parties, par exemple grâce à un mur permanent à la place de la vanne 23 ci-dessus, pour faciliter les interventions de maintenance dans le bassin d'aspiration. Dans une telle réalisation, il est nécessaire de pouvoir assurer une liaison fluidique telle que celle réalisée par le tunnel de liaison 30, pour satisfaire le critère de défaillance unique relativement à l'alimentation en eau de chaque station de pompage. Comme mentionné précédemment, il est également possible de former le bassin d'aspiration 2' en deux parties disjointes éloignées l'une de l'autre, dès lors que ces parties sont reliées entre elles de manière fluidique. La liaison fluidique peut éventuellement être munie d'au moins une vanne généralement fermée et commandée par exemple de façon à s'ouvrir automatiquement en réponse à une baisse anormale du niveau d'eau dans l'une quelconque des deux parties du bassin d'aspiration.

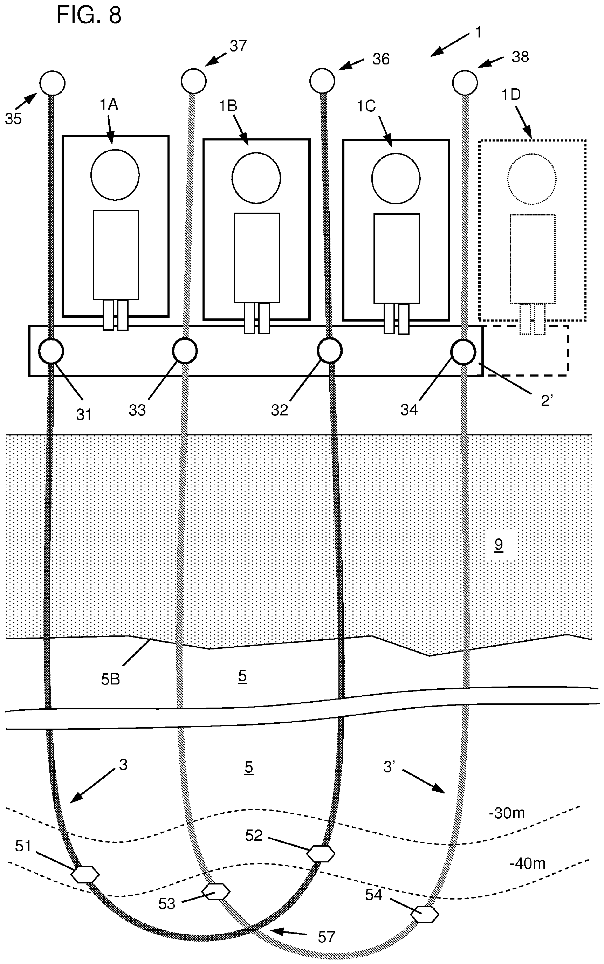

Sur la FIG.8, la centrale nucléaire représentée diffère de celle correspondant à la FIG.7 essentiellement en ce qu'elle comprend au moins une tranche nucléaire supplémentaire 1C alimentée en eau par le même bassin d'aspiration 2', et en ce que l'installation d'amenée d'eau comprend un deuxième tunnel d'aspiration 3' formant une boucle. Le deuxième tunnel 3' peut être de structure identique à celle du premier tunnel 3, et présente de même deux extrémités 33 et 34 qui communiquent chacune avec le bassin d'aspiration 2' par un conduit généralement vertical. De même que le premier tunnel 3, le deuxième tunnel 3' est associé à deux entrées d'eau 53 et 54, et peut également comprendre au moins un tronçon d'entretien en pente depuis une zone de départ au sol 37 ou depuis une zone d'arrivée au sol 38.

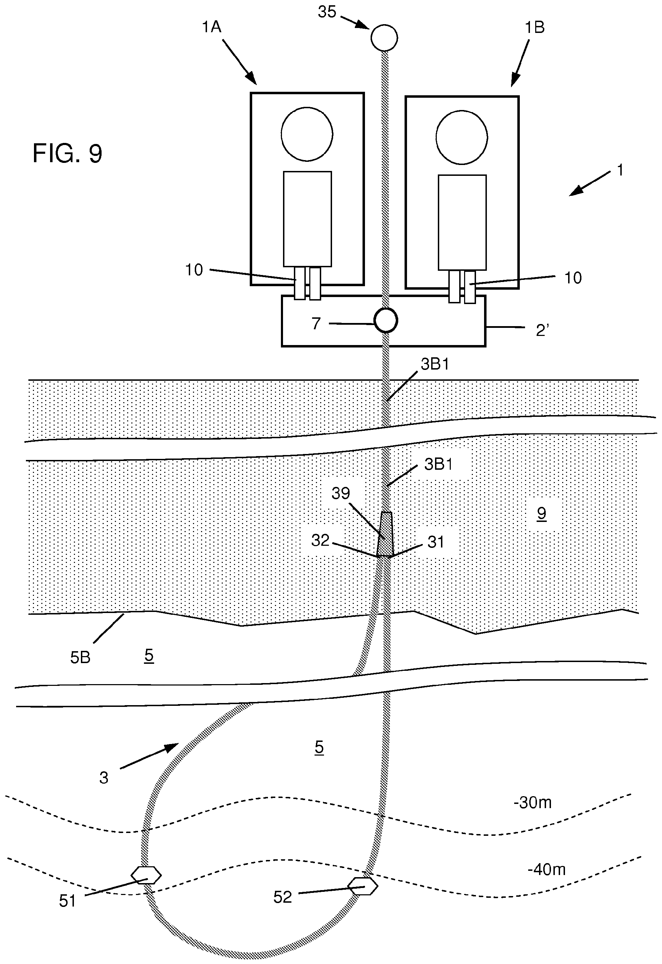

Dans la configuration représentée, les premier et deuxième tunnels d'aspiration 3 et 3' sont décalés en hauteur par exemple d'une dizaine de mètres l'un par rapport à l'autre, au moins dans une zone 57 où les chemins des tunnels se croisent vus de haut. Par exemple, le tunnelier creusant le deuxième tunnel 3' passe sous le premier tunnel 3 dans la zone de croisement 57. La zone de croisement 57 constitue une zone de relative fragilité eu égard à un éventuel séisme qui surviendrait dans cette zone, puisque les deux tunnels 3 et 3' risqueraient d'être endommagés. Néanmoins, si les tunnels sont endommagés uniquement dans cette zone de croisement 57, l'alimentation du bassin d'aspiration 2' par les quatre entrées d'eau 51, 52, 53 et 54 reste assurée. Une telle configuration avec une zone de croisement des deux tunnels pourrait donc être acceptable en termes de sécurité, en particulier dans des régions à faible risque sismique. Il est entendu que d'autres configurations des chemins des tunnels sont possibles, en particulier avec deux tunnels disposés dans un même plan sans se croiser, ce qui est préférable dans des régions où existe un risque sismique. On peut envisager par exemple deux tunnels ayant chacun la même forme que celui de la FIG.1 et symétriques l'un par rapport à l'autre. On peut également prévoir une configuration de chaque tunnel avec les première et deuxième extrémités 31 et 32 de la boucle du tunnel disposées quasiment en coïncidence, comme dans la réalisation en référence à la FIG.6 ou encore dans la réalisation en référence à la FIG.9 commentée plus loin.

En dépit du coût de construction généralement supérieur, une configuration à deux tunnels d'aspiration pour un bassin d'aspiration 2' alimentant en eau au moins trois tranches nucléaires peut dans certains cas être préférée à une configuration avec un unique tunnel d'aspiration 3 pour alimenter le même nombre de tranches nucléaires. En effet, le fait de doubler les entrées d'eau et les branches de tunnel permet d'alimenter le bassin de façon encore plus sûre, ce qui peut s'avérer préférable en particulier dans des régions où existent des risques géologiques et par exemple sismiques de nature à faire risquer un effondrement dans un tunnel. En outre, chacun des deux tunnels d'aspiration aura un diamètre utile inférieur au diamètre utile nécessaire pour un unique tunnel d'aspiration, lequel peut s'avérer trop grand pour être creusé par les tunneliers existants. En particulier, avec une quatrième tranche nucléaire 1D, le diamètre utile nécessaire pour un unique tunnel d'aspiration devrait être par exemple de l'ordre de 10 mètres pour permettre un débit de 280 m3 d'eau par seconde dans une seule branche de tunnel en cas d'effondrement dans l'autre branche de tunnel, ce débit étant nécessaire pour le refroidissement de quatre tranches nucléaires simultanément en puissance.

Sur la FIG.9, la centrale nucléaire représentée diffère de celle correspondant à la FIG.6 essentiellement en ce que la jonction des première et deuxième extrémités 31 et 32 de la boucle du tunnel s'effectue dans une zone de jonction souterraine 39 à distance de la zone souterraine où le tunnel est raccordé à un conduit 7 sous le bassin d'aspiration. Ainsi, la boucle du tunnel est reliée au conduit 7 par une unique branche 3B1 du tunnel. Dans la configuration représentée, la centrale nucléaire est séparée du bord de mer 5B par une bande de terre 9 par exemple large d'au moins 500 m, et la branche 3B1 du tunnel s'étend sur une longueur d'au moins 500 mètres également. Par rapport à une forme de tunnel avec les deux extrémités 31 et 32 de la boucle situées sous le bassin d'aspiration, la longueur du tunnel est raccourcie d'une longueur de l'ordre de celle de la branche 3B1, ce qui peut diminuer de façon appréciable le coût de construction du tunnel. La configuration représentée pourra être préférée en particulier dans des régions où la stabilité géologique implique que les risques d'effondrement dans un tunnel sont très faibles, et encore plus particulièrement pour une réalisation dans laquelle deux tunnels similaires alimentent en eau un même bassin d'aspiration, la présence des deux tunnels permettant de satisfaire complètement le critère de défaillance unique.

**Revendications**

1. Installation d'amenée d'eau pour au moins un circuit de refroidissement (11) à échangeur de chaleur (13) d'une ou plusieurs tranches (1A, 1B, 1C, 1D) d'une centrale nucléaire (1), comprenant :

   un bassin d'aspiration (2, 2') alimenté en eau et à partir duquel au moins une station de pompage (10) de la centrale aspire de l'eau pour la faire circuler dans un dit circuit de refroidissement (11);
   et un tunnel d'aspiration (3) communicant avec le bassin d'aspiration (2, 2') pour l'alimenter en eau, relié à au moins deux entrées d'eau (51, 52) immergées dans une étendue d'eau (5) telle qu'une mer, un lac ou un fleuve;
   **caractérisée en ce qu'**au moins une partie dudit tunnel d'aspiration (3) forme une boucle présentant deux extrémités (31, 32) qui communiquent avec le bassin d'aspiration (2),
   les deux entrées d'eau (51, 52) étant raccordées au tunnel d'aspiration en boucle pour que dans le cas d'une obstruction locale (55) causée par un effondrement dans le tunnel, le bassin d'aspiration (2, 2') reste alimenté en eau par les deux entrées d'eau (51, 52).

2. Installation d'amenée d'eau selon la revendication 1, dans laquelle ledit tunnel d'aspiration (3) présente un tronçon en courbe (3C) ayant un rayon de courbure (R) compris entre 50 mètres et 300 mètres.

3. Installation d'amenée d'eau selon la revendication 2, dans laquelle ledit tronçon en courbe (3C) forme un arc de cercle s'étendant sur au moins un demi-cercle.

4. Installation d'amenée d'eau selon l'une quelconque des revendications 1 à 3, dans laquelle au moins une dite entrée d'eau (51, 52) est immergée à une profondeur (Ho) de l'étendue d'eau telle que la température de l'eau à ladite profondeur (Ho) reste toute l'année inférieure à 21°C et de préférence inférieure à 16°C.

5. Installation d'amenée d'eau selon l'une quelconque des revendications 1 à 4, comprenant un deuxième tunnel d'aspiration (3') relié à au moins deux entrées d'eau (53, 54) immergées dans ladite étendue d'eau (5), ledit deuxième tunnel d'aspiration (3') formant une boucle présentant deux extrémités (33, 34) qui communiquent avec le bassin d'aspiration (2').

6. Installation d'amenée d'eau selon l'une quelconque des revendications 1 à 5, dans laquelle le tunnel d'aspiration (3) se prolonge à au moins l'une de ses deux extrémités (31, 32) par un tunnel d'entretien (3A, 3E) comprenant une partie en pente qui débouche au sol, ledit tunnel d'entretien (3A, 3E) ayant été creusé par un tunnelier qui a servi à creuser le tunnel d'aspiration.

7. Installation d'amenée d'eau selon l'une quelconque des revendications 1 à 6, dans laquelle lesdites au moins deux entrées d'eau immergées (51, 52) sont situées chacune au niveau d'une extrémité supérieure d'un puits d'aspiration (8) essentiellement vertical raccordé au tunnel d'aspiration (3) et sont distantes d'au moins 100 mètres l'une de l'autre.

8. Installation d'amenée d'eau selon l'une quelconque des revendications 1 à 7, dans laquelle le bassin d'aspiration (2) est situé dans une partie de fond (63) d'un chenal (6), ledit chenal comprenant une partie d'entrée (60) qui communique avec ladite étendue d'eau (5), et l'installation comprend au moins une paroi (62) qui réalise une séparation entre ladite partie de fond (63) et ladite partie d'entrée (60) du chenal de façon à ce que l'eau du bassin d'aspiration (2) ne se mélange pas avec l'eau de ladite partie d'entrée (60) du chenal.

9. Installation d'amenée d'eau selon l'une quelconque des revendications 1 à 8, dans laquelle le bassin d'aspiration (2) est couvert par un dispositif formant un couvercle (25) essentiellement étanche à l'eau, et des ouvertures calibrées (26) entre le bassin d'aspiration et l'environnement extérieur au bassin sont réalisées dans le dispositif formant un couvercle (25) ou à proximité, de façon à laisser passer un flux d'eau limité (In) depuis le bassin d'aspiration vers ledit environnement extérieur en cas de remplissage complet du bassin dû à une montée des eaux inhabituelle de ladite étendue d'eau.

10. Installation d'amenée d'eau selon l'une quelconque des revendications 1 à 9, dans laquelle les deux extrémités (31, 32) de la boucle formée par le tunnel d'aspiration (3) se situent au niveau d'une même cavité souterraine (3A1) qui communique avec le bassin d'aspiration par l'intermédiaire d'un unique conduit (7') généralement vertical.

11. Centrale nucléaire comprenant au moins une tranche nucléaire (1A) et une installation d'amenée d'eau selon l'une quelconque des revendications 1 à 10, dans laquelle le tunnel d'aspiration (3) et chacune desdites entrées d'eau (51, 52) sont dimensionnés de façon à ce que l'alimentation du bassin d'aspiration par une seule et quelconque des deux extrémités (31, 32) du tunnel d'aspiration et à partir d'une seule et quelconque desdites entrées d'eau (51, 52) soit suffisante pour alimenter en eau la totalité des stations de pompage (10) de ladite installation en fonctionnement normal de l'unique tranche ou de la totalité des tranches nucléaires de la centrale.

**12.** Centrale nucléaire selon la revendication 11, comprenant au moins deux tranches nucléaires (1A, 1B, 1C, 1D), dans laquelle ledit bassin d'aspiration (2') alimente en eau plusieurs stations de pompage (10) affectées chacune à une tranche nucléaire.

**13.** Centrale nucléaire comprenant au moins deux tranches nucléaires (1A, 1B, 1C, 1D) et une installation d'amenée d'eau selon l'une quelconque des revendications 1 à 10, dans laquelle l'installation d'amenée d'eau comprend au moins un deuxième tunnel d'aspiration (3') formant une boucle et présentant deux extrémités (33, 34) qui communiquent avec le bassin d'aspiration (2').

**14.** Procédé pour réaliser une installation d'amenée d'eau selon l'une quelconque des revendications 1 à 10, mettant en oeuvre une étape de creusement du tunnel d'aspiration (3) par un tunnelier suivant un parcours prédéterminé, dans lequel ladite étape de creusement comprend successivement les deux étapes suivantes :

- le tunnelier creuse un premier tronçon (3A) du tunnel en pente descendante depuis une zone de départ au sol (35), jusqu'à atteindre une première zone souterraine (3A1) située à une profondeur prédéterminée sous une première zone (21) du bassin d'aspiration, ladite première zone souterraine (3A1) constituant une première extrémité (31) de la boucle formée par le tunnel;
- le tunnelier poursuit le creusement du tunnel pour former un deuxième tronçon (3B) en direction de l'étendue d'eau, puis pour former un troisième tronçon (3C) en arc de cercle suivi d'un quatrième tronçon (3D) en direction de la centrale, ledit quatrième tronçon (3D) atteignant une deuxième zone souterraine (3A2) située à une profondeur prédéterminée sous une deuxième zone (22) du bassin d'aspiration, ladite deuxième zone souterraine (3A2) constituant une deuxième extrémité (32) de la boucle formée par le tunnel (3);

et dans lequel on creuse un premier conduit généralement vertical (7) reliant ladite première zone souterraine (3A1) à ladite première zone (21) du bassin d'aspiration et on creuse un deuxième conduit généralement vertical (7) reliant ladite deuxième zone souterraine (3A2) à ladite deuxième zone (22) du bassin d'aspiration.

**15.** Procédé selon la revendication 14, dans lequel ladite étape de creusement comprend une troisième étape pendant laquelle le tunnelier creuse un cinquième tronçon (3E) du tunnel comprenant une partie en pente ascendante depuis ladite deuxième zone souterraine (3A2), jusqu'à une zone d'arrivée au sol (36) par laquelle le tunnelier est évacué du tunnel.

## Patentansprüche

**1.** Wassereinlassanlage für mindestens einen Kühlkreislauf (11) mit Wärmeaustauschern (13) eines oder mehrerer Blöcke (1A, 1B, 1C, 1D) eines Kernkraftwerks (1), umfassend:

ein Ansaugbecken (2, 2'), das mit Wasser versorgt wird und ab welchem mindestens eine Pumpstation (10) des Kraftwerks Wasser ansaugt, um es in dem Kühlkreislauf (11) zirkulieren zu lassen;
und einen Ansaugtunnel (3), der mit dem Ansaugbecken (2, 2') in Kommunikation steht, um es mit Wasser zu versorgen und der mit mindestens zwei Wassereingängen (51, 52), die in einer Wasserfläche (5), wie einem Meer, einem Fluss oder einem Fluss eingetaucht sind, verbunden ist;
**dadurch gekennzeichnet, dass** mindestens ein Teil des Ansaugtunnels (3) eine Schleife bildet, die zwei Enden (31, 32) aufweist, die mit dem Ansaugbecken (2) in Kommunikation stehen,
wobei die zwei Wassereingänge (51, 52) mit dem Ansaugtunnel in Schleife verbunden sind, damit in dem Fall einer lokalen Verstopfung (55), die durch ein Einstürzen in dem Tunnel verursacht wird, das Ansaugbecken (2, 2') von den zwei Wassereingängen (51, 52) versorgt bleibt.

**2.** Wassereinlassanlage nach Anspruch 1, wobei der Ansaugtunnel (3) einen Kurvenabschnitt (3C) aufweist, der einen Krümmungsradius (R) zwischen 50 Meter und 300 Meter aufweist.

**3.** Wassereinlassanlage nach Anspruch 2, wobei der Kurvenabschnitt (3C) einen Kreisbogen bildet, der sich auf mindestens einem Halbkreis erstreckt.

**4.** Wassereinlassanlage nach einem der Ansprüche 1 bis 3, wobei mindestens ein Wassereingang (51, 52) in einer Tiefe (Ho) der Wasserfläche derart eingetaucht ist, dass die Temperatur des Wassers an der Tiefe (Ho) das ganze Jahr über niedriger als 21 °C und bevorzugt niedriger als 16 °C bleibt.

5. Wassereinlassanlage nach einem der Ansprüche 1 bis 4, die einen zweiten Ansaugtunnel (3') umfasst, der mit mindestens zwei Wassereingängen (53, 54), die in der Wasserfläche (5) eingetaucht sind, verbunden ist, wobei der zweite Ansaugtunnel (3') eine Schleife bildet, die zwei Enden (33, 34) aufweist, die mit dem Ansaugbecken (2') in Kommunikation stehen.

6. Wassereinlassanlage nach einem der Ansprüche 1 bis 5, wobei sich der Ansaugtunnel (3) an mindestens einem seiner zwei Enden (31, 32) durch einen Wartungstunnel (3A, 3E) verlängert, der einen Gefälleteil umfasst, der auf dem Grund mündet, wobei der Wartungstunnel (3A, 3E) von einer Tunnelbohrmaschine gegraben wurde, die zum Graben des Ansaugtunnels gedient hat.

7. Wassereinlassanlage nach einem der Ansprüche 1 bis 6, wobei die mindestens zwei eingetauchten Wassereingänge (51, 52) jeweils auf dem Niveau eines oberen Endes eines Ansaugschachts (8), der im Wesentlichen vertikal ist, der an den Ansaugtunnel (3) angeschlossen ist, liegen und voneinander um mindestens 100 Meter beabstandet sind.

8. Wassereinlassanlage nach einem der Ansprüche 1 bis 7, wobei das Ansaugbecken (2) in einem Grundteil (63) eines Zulaufkanals (6) liegt, wobei der Zulaufkanal einen Einlassteil (60) umfasst, der mit der Wasserfläche (5) in Kommunikation steht, und wobei die Anlage mindestens eine Wand (62) umfasst, die eine Trennung zwischen dem Grundteil (63) und dem Einlassteil (60) des Zulaufkanals derart herstellt, dass sich das Wasser des Ansaugbeckens (2) nicht mit dem Wasser des Einlassteils (60) des Zulaufkanals vermischt.

9. Wassereinlassanlage nach einem der Ansprüche 1 bis 8, wobei das Ansaugbecken (2) von einer Vorrichtung, die einen Deckel (25) bildet, der im Wesentlichen wasserdicht ist, abgedeckt ist, und wobei kalibrierte Öffnungen (26) zwischen dem Ansaugbecken und der äußeren Umgebung des Beckens in der Vorrichtung, die einem Deckel (25) bildet, oder in der Nähe derart hergestellt sind, dass sie einen begrenzten Wasserfluss (In) von dem Ansaugbecken zu der äußeren Umgebung im Fall eines vollständigen Füllens des Beckens aufgrund eines ungewöhnlichen Ansteigens der Gewässer der Wasserfläche durchlassen.

10. Wassereinlassanlage nach einem der Ansprüche 1 bis 9, wobei die zwei Enden (31, 32) der Schleife, die von dem Ansaugtunnel (3) gebildet wird, auf dem Niveau desselben unterirdischen Hohlraums (3A1) liegen, der mit dem Ansaugbecken über eine einzige Leitung (7'), die im Allgemeinen vertikal ist, kommuniziert.

11. Kernkraftwerk, das mindestens einen Kernkraftwerkblock (1A) und eine Wassereinlassanlage nach einem der Ansprüche 1 bis 10 umfasst, wobei der Ansaugtunnel (3) und jeder der Wassereingänge (51, 52) derart bemessen sind, dass die Versorgung des Ansaugbeckens durch ein einziges und beliebiges der zwei Enden (31, 32) des Ansaugtunnels und ausgehend von einem einzigen und beliebigen der Wassereingänge (51, 52) ausreicht, um sämtliche Pumpstationen (10) der Anlage beim ordnungsgemäßen Betrieb des einzigen Kraftwerkblocks oder sämtlicher Kraftwerkblöcke des Kraftwerks zu versorgen.

12. Kernkraftwerk nach Anspruch 11, das mindestens zwei Kernkraftwerkblöcke (1A, 1B, 1C, 1D) umfasst, wobei das Ansaugbecken (2') mehrere Pumpstationen (10), die jeweils einem Kernkraftwerkblock zugewiesen sind, versorgt.

13. Kernkraftwerk, das mindestens zwei Kernkraftwerkblöcke (1A, 1B, 1C, 1D) und eine Wassereinlassanlage nach einem der Ansprüche 1 bis 10 umfasst, wobei die Wassereinlassanlage mindestens einen zweiten Ansaugtunnel (3') umfasst, der eine Schleife bildet und zwei Enden (33, 34) aufweist, die mit dem Ansaugbecken (2') in Kommunikation stehen.

14. Verfahren zum Herstellen einer Wassereinlassanlage nach einem der Ansprüche 1 bis 10, das einen Bohrschritt des Ansaugtunnels (3) durch eine Tunnelbohrmaschine entlang eines vorbestimmten Verlaufs umsetzt, wobei der Bohrschritt nacheinander die zwei folgenden Schritte aufweist:

- die Tunnelbohrmaschine bohrt einen ersten Abschnitt (3A) des Tunnels mit absteigendem Gefälle ausgehend von einer Ausgangszone auf dem Grund (35), bis eine erste unterirdische Zone (3A1) erreicht wird, die in einer vorbestimmten Tiefe unter einer ersten Zone (21) des Ansaugbeckens liegt, wobei die erste unterirdische Zone (3A1) ein erstes Ende (31) der von dem Tunnel gebildeten Schleife bildet;
- die Tunnelbohrmaschine setzt das Bohren des Tunnels fort, um einen zweiten Abschnitt (3B) in Richtung der Wasserfläche zu bilden, dann um einen dritten Abschnitt (3C) im Kreisbogen gefolgt von einem vierten Abschnitt (3D) in Richtung des Kraftwerks zu bilden, wobei der vierte Abschnitt (3D) eine zweite unterirdische Zone (3A2) erreicht, die in einer vorbestimmten Tiefe unter einer zweiten Zone (22) des Ansaugbeckens liegt, wobei die zweite unterirdische Zone (3A2) ein zweites Ende (32) der von dem Tunnel (3) gebildeten Schleife bildet;

und bei dem man einen ersten allgemein vertikalen Kanalzug (7) bohrt, der die erste unterirdische Zone (3A1) mit der ersten Zone (21) des Ansaugbeckens verbindet, und man einen zweiten allgemein vertikalen Kanalzug (7) bohrt, der die zweite unterirdische Zone (3A2) mit der zweiten Zone (22) des Ansaugbeckens verbindet.

15. Verfahren nach Anspruch 14, wobei der Bohrschritt einen dritten Schritt umfasst, bei dem die Tunnelbohrmaschine einen fünften Abschnitt (3E) des Tunnels bohrt, der einen Teil mit aufsteigendem Gefälle ausgehend von der zweiten unterirdischen Zone (3A2) bis zu einer Ankunftszone auf dem Grund (36), durch die die Tunnelbohrmaschine den Tunnel verlässt, umfasst.

**Claims**

1. Water-intake installation for at least one cooling circuit (11) with a heat exchanger (13) of one or more units (1A, 1B, 1C, 1D) of a nuclear power plant (1), comprising:

   - a suction pond (2, 2') supplied with water and from which at least one pumping station (10) of the plant sucks water in order to circulate it in a said cooling circuit (11);
   and a suction tunnel (3) communicating with the suction pond (2, 2') in order to supply it with water, connected to at least two water inlets (51, 52) immersed in a stretch of water (5) such as a sea, a lake or a river;
   **characterised in that** at least a part of said suction tunnel (3) forms a loop having two ends (31, 32) that communicate with the suction pond (2), the two water inlets (51, 52) being connected to the suction tunnel in a loop so that, in the event of a local obstruction (55) caused by a collapse in the tunnel, the suction pond (2, 2') remains supplied with water by the two water inlets (51, 52).

2. Water-intake installation according to claim 1, in which said suction tunnel (3) has a curved portion (3C) having a radius of curvature (R) of between 50 metres and 300 metres.

3. Water-intake installation according to claim 2, in which said curved portion (3C) forms an arc of a circle extending over at least a semicircle.

4. Water-intake installation according to any of claims 1 to 3, in which at least one said water inlet (51, 52) is immersed at a depth (Ho) of the stretch of water such that the temperature of the water at said depth (Ho) remains, throughout the year, less than 21°C and preferably less than 16°C.

5. Water-intake installation according to any of claims 1 to 4, comprising a second suction tunnel (3') connected to at least two water intakes (53, 54) immersed in said stretch of water (5), said second suction tunnel (3') forming a loop having two ends (33, 34) that communicate with the suction pond (2').

6. Water-intake installation according to any of claims 1 to 5, in which the suction tunnel (3) is extended at at least one of the two ends thereof (31, 32) by a maintenance tunnel (3A, 3E) comprising a sloping part that emerges at ground level, said maintenance tunnel (3A, 3E) having been bored by a tunnelling machine that was used to bore the suction tunnel.

7. Water-intake installation according to any of claims 1 to 6, in which said at least two immersed water intakes (51, 52) are each situated at a top end of an essentially vertical suction well (8) connected to the suction tunnel (3) and are distant from each other by at least 100 metres.

8. Water-intake installation according to any of claims 1 to 7, in which the suction pond (2) is situated in a bottom part (63) of a channel (6), said channel comprising an intake part (60) that communicates with said stretch of water (5), and the installation comprises at least one wall (62) that effects a separation between said bottom part (63) and said intake part (60) of the channel so that the water in the suction pond (2) does not mix with the water in said intake part (60) of the channel.

9. Water-intake installation according to any of claims 1 to 8, in which the suction pond (2) is covered by a device forming an essentially watertight cover (25), and calibrated openings (26) between the suction pond and the environment external to the pond are produced in the device forming a cover (25) or in the vicinity, so as to allow a limited flow of water (In) to pass from the suction pond to said external environment in the event of complete filling of the pond due to an unusual rise in the water of said stretch of water.

10. Water-intake installation according to any of claims 1 to 9, in which the two ends (31, 32) of the loop formed by the suction tunnel (3) are situated at the same underground cavity (3A1) that communicates with the suction pond by means of a single generally vertical conduit (7').

11. Nuclear power station comprising at least one nuclear unit (1A) and a water-intake installation according to any of claims 1 to 10, in which the suction tunnel (3) and each of said water intakes (51, 52) are sized so that the supply to the suction pond by a single one and either of the two ends (31, 32) of the suction tunnel and from a single one and either of said water intakes (51, 52) is sufficient to supply water to all the pumping stations (10) of said installation in normal operation of the single unit or of all the nuclear units of the plant.

12. Nuclear power plant according to claim 11, comprising at least two nuclear units (1A, 1B, 1C, 1D), in which said suction pond (2') supplies water to a plurality of pumping stations (10) each allocated to a nuclear unit.

13. Nuclear power plant comprising at least two nuclear units (1A, 1B, 1C, 1D) and a water-intake installation according to any of claims 1 to 10, in which the water-intake installation comprises at least one second suction tunnel (3') forming a loop and having two ends (33, 34) that communicate with the suction pond (2').

14. Method for implementing a water-intake installation according to any of claims 1 to 10, using a step of boring the suction tunnel (3) by means of a tunnelling machine following a predetermined path, in which said boring step comprises successively the following two steps:

    - the tunnelling machine bores a first portion (3A) of the tunnel in a descending slope from a departure zone at ground level (35), until it reaches a first underground zone (3A1) situated at a predetermined depth under a first zone (21) of the suction pond, said first underground zone (3A1) constituting a first end (31) of the loop formed by the tunnel;
    - the tunnelling machine continues the boring of the tunnel in order to form a second portion (3B) in the direction of the stretch of water, then to form a third portion (3C) in an arc of a circle followed by a fourth portion (3D) in the direction of the plant, said fourth portion (3D) reaching a second underground zone (3A2) situated at a predetermined depth under a second zone (22) of the suction pond, said second underground zone (3A2) constituting a second end (32) of the loop formed by the tunnel (3);

    and in which a first generally vertical conduit (7) is bored, connecting said first underground zone (3A1) to said first zone (21) of the suction pond, and a second generally vertical conduit (7) is bored, connecting said second underground zone (3A2) to said second zone (22) of the suction pond.

15. Method according to claim 14, in which said boring step comprises a third step during which the tunnelling machine bores a fifth portion (3E) of the tunnel comprising a part in an ascending slope from said second underground zone (3A2) as far as a zone arriving at ground level (36) through which the tunnelling machine is removed from the tunnel.

FIG. 1

FIG. 2

# FIG. 3

EP 2 936 500 B1

FIG. 4

EP 2 936 500 B1

FIG. 5

EP 2 936 500 B1

FIG. 6

FIG. 7

FIG. 8

FIG. 9

**EP 2 936 500 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2000170138 A
- DE 2559305
- JP S5746197 B
- CH 517352
- US 6095719 A
- JP 60111089 A